# EUROPÄISCHE PATENTANMELDUNG

(11) **EP 1 775 036 A2**
(43) Veröffentlichungstag der Anmeldung: **18.04.2007**
(21) Anmeldenummer: 06450147.1
(22) Anmeldetag: 17.10.2006
(51) Int. Cl.: B09B 1/00, B09B 3/00, B09C 1/00

(54) **Verfahren zum Versorgen eines Poren aufweisenden Materials mit einem Gas**

(30) Priorität: 17.10.2005 AT 16952005
(71) Anmelder: Terra Umwelttechnik GmbH, 1230 Wien (AT)
(72) Erfinder: Philipp, Robert, Dipl.-Ing., 1230 Wien (AT)
(74) Vertreter: Kopecky, Helmut

(57) **Zusammenfassung**

Ein Verfahren zum zuverlässigen Versorgen eines Poren aufweisenden Material (M) - auch wenn es schlechter durchlässige Bereiche aufweist - mit einem Gas, wobei das Gas in das Material (M) an mindestens einer ersten Stelle (A) einströmen und an mindestens einer zweiten, von dieser ersten Stelle im Abstand (6) angeordneten Stelle (B) ausströmen gelassen wird, ist dadurch gekennzeichnet, dass zwischen der ersten Stelle (A) und der zweiten Stelle (B) ein periodisch wechselnder Druckunterschied zwischen dem einströmenden Gas und dem ausströmenden Gas erzeugt wird, wobei jedoch die Strömungsrichtung des Gases von der ersten Stelle (A) zur zweiten Stelle (B) aufrecht erhalten wird (Fig. 2).

## Beschreibung

Die Erfindung betrifft ein Verfahren zum Versorgen eines Poren aufweisenden Materials mit einem Gas, wobei das Gas in das Material an mindestens einer ersten Stelle einströmen und an mindestens einer zweiten, von dieser ersten. Stelle im Abstand angeordneten Stelle ausströmen gelassen wird, sowie eine Anlage zur Durchführung des Verfahrens.

In einem Deponiekörper, in welchem auch unstabilisiertes organisches Material eingebracht wurde, laufen anaerobe Abbaureaktionen des organischen Materials ab. Diese bilden Deponiegas. Dieses besteht zumeist aus Methan sowie weiteren Beimengungen, welchen zumeist üble Gerüche zusätzlich zum Gefährdungspotential des Methans innewohnen. Auch sind diese Gase stark keimbelastet. Pathogene Keime sind nicht auszuschließen.

Soll dieses verhindert werden, z.B. um vor einer Deponieräumung eine Vorbelüftung durchzuführen, um Anwohner und Arbeiter zu schützen, so muss man den Deponiekörper vom anaeroben Zustand in den aeroben Zustand bringen. Hierfür sind Verfahren am Markt ("Biopuster®" Firma Porr, "Smellwell®" Firma Innovative Umwelttechnik etc.). Den bekannten Verfahren ist gemein, dass Limitationen bestehen, feinkörnige Untergrundbereiche zu erreichen, da die gröberen Poren des gröberen Materials wesentlich bessere Durchlässigkeiten bei wesentlich geringerem Widerstand aufweisen und so "keine" Luftströmungen in den kleineren Poren des feineren Materials bewirkt werden können.

Bevorzugte Wegigkeiten (größere Poren = kleinerer Widerstand = bevorzugte Wegigkeit) bilden sich umso ungünstiger, je undurchlässiger der Boden ist und mit umso mehr Energie versucht wird, Gas einzubringen. Also ist es am ungünstigsten, Gas unter hohem Druck in einen dichten Boden einzupressen. Es hat sich gezeigt, dass die Art der Zufuhr (kontinuierlich oder stoßweise) nur einen sehr geringen Unterschied im Vergleich zu den erzeugten Wegigkeiten darstellt. Ist ein solcher "Gang" erst erzeugt, folgt jede eingebrachte Gasmenge diesem Gang. Der Zwang, diesem zu folgen, steigt mit zunehmendem Druck und ist völlig unabhängig vom Zeitintervall, in welchem er aufgebracht wird.

Der Gedanke, mehr Druck aufzubringen, dadurch zwar die Verluste zu erhöhen, aber auch die Randwirkung (mit Randwirkungen ist hier gemeint, dass nicht alles Gas durch die Wegigkeit abdriftet, sondern aufgrund eines "Staues" in der Wegigkeit auch andere Möglichkeiten nutzt; diese anderen Möglichkeiten sind in diesem Falle die erwünschten Transportwege zu jeder einzelnen Bodenpore) zu steigern, funktioniert zwar, bedingt aber das Aufbringen immer höherer Drücke, da auch die Wegigkeiten sich anpassen, bis sich zu jedem eingestellten Maximaldruck nach relativ kurzer Aufbringungsdauer (egal ob permanent oder in mehreren Intervallen), eine zugehörige Aufnahmefähigkeit der Wegigkeit eingestellt hat und keine Randwirkungen mehr stattfinden.

Die Erfindung bezweckt die Vermeidung dieser Nachteile und Schwierigkeiten und stellt sich die Aufgabe, ein Verfahren der eingangs beschriebenen Art sowie eine Anlage zur Durchführung des Verfahrens zu schaffen, welche eine zuverlässige Gasdurchströmung auch schlechter durchlässiger Bereiche eines Materials ermöglichen.

Diese Aufgabe wird bei einem Verfahren der eingangs beschriebenen Art dadurch gelöst, dass zwischen der ersten Stelle und der zweiten Stelle ein periodisch wechselnder Druckunterschied zwischen dem einströmenden Gas und dem ausströmenden Gas erzeugt wird, wobei jedoch die Strömungsrichtung des Gases von der ersten Stelle zur zweiten Stelle aufrecht erhalten wird.

Vorzugsweise wird in einem ersten Schritt das Gas an der ersten Stelle eingeblasen und an der zweiten Stelle ausströmen gelassen, worauf in einem zweiten Schritt an der zweiten Stelle Gas abgesaugt wird und an der ersten Stelle einströmen gelassen wird, worauf gegebenenfalls diese zwei Schritte ein- oder mehrfach wiederholt werden.

Eine weitere bevorzugte Variante ist dadurch gekennzeichnet, dass in einem ersten Schritt das Gas an der ersten Stelle eingeblasen wird und an der zweiten Stelle ausströmen gelassen wird, worauf das Einblasen an der ersten Stelle druckmäßig abgesenkt oder eingestellt wird und an der zweiten Stelle jedoch das Ausströmen-Lassen aufrechterhalten wird, worauf gegebenenfalls diese zwei Schritte ein- oder mehrfach wiederholt werden.

Weiters ist es auch möglich, dass in einem ersten Schritt das Gas an der zweiten Stelle abgesaugt wird und an der ersten Stelle einströmen gelassen wird und in einem zweiten Schritt der Absaugunterdruck an der zweiten Stelle abgesenkt oder das Absaugen eingestellt wird und an der ersten Stelle das Einströmen-Lassen aufrechterhalten wird, worauf gegebenenfalls diese zwei Schritte ein- oder mehrfach wiederholt werden.

Um für das Gas nicht bevorzugte Wegigkeiten ausbilden zu lassen, wird zweckmäßig der periodisch wechselnde Druckunterschied zwischen einem maximalen Überdruck von 3 bar und einem maximalen Unterdruck von -0,99 bar eingestellt, wobei vorzugsweise der Druckunterschied in Abhängigkeit der Porosität des Materials eingestellt wird, vorzugsweise für gut durchlässige Materialien mit Korngrößen > 0,2 mm zwischen einem Überdruck von 0,5 bar und einem Unterdruck von -0,2 bar.

Von einer gewissen Bedeutung ist, dass die Zeitdauer zwischen einem Maximaldruck und einem Minimaldruck in Abhängigkeit der Korngröße des Materials festgelegt wird, und zwar derart, dass ein periodisch wechselnder Druckunterschied über das gesamte Material erzeugt wird.

Für ein Material mit einer durchschnittlichen Korngröße > 0,2 mm wird zweckmäßig ein Zeitintervall vom Maximaldruck bis zum Minimaldruck von etwa fünf Minuten eingehalten.

Die Distanz von der ersten Stelle bis zur zweiten Stelle wird zweckmäßig derart festgelegt, dass der Maximaldruck und der Minimaldruck jeweils etwa fünf Minuten auf das gesamte Material einwirken.

Vorzugsweise wird zwischen aufeinanderfolgenden Druckwechseln eine Ruhephase bei konstantem Druck eingehalten.

Ein Verfahren zum optimalen Einstellen der Versorgung des Materials mit Gas ist dadurch gekennzeichnet, dass an der ersten Stelle und an der zweiten Stelle bzw. an mehreren der ersten Stellen und an mehreren der zweiten Stellen, sowie gegebenenfalls auch zwischen der ersten Stelle und der zweiten Stelle, Druckmesseinrichtungen vorgesehen werden, worauf die Stelle bzw. die Stellen, bei denen Gas ausströmt, derart verschlossen werden, dass eine Kommunikation mit der Außenluft nicht mehr möglich ist, worauf über die Druckmesseinrichtungen nach Einleiten von Gas in die andere(n) Stelle(n) die Druckausbreitung beobachtet wird, bis kein Druckanstieg mehr an einer der Druckmesseinrichtungen feststellbar ist, sodann wird mit einer Absaugung begonnen und erneut über die Druckmesseinrichtungen eine Druckänderung so lange beobachtet, bis kein Absinken des Druckes mehr an einer der Druckmesseinrichtungen feststellbar ist.

Eine Anlage zur Durchführung des Verfahrens ist gekennzeichnet durch:
- mindestens eine Gaszuführeinrichtung, vorgesehen in dem Material,
- mindestens eine Gasabführeinrichtung, vorgesehen in dem Material im Abstand von der Gaszuführeinrichtung,
- mindestens eine das zuzuführende Gas unter Druck oder Unterdruck setzende Pumpeinrichtung und/oder mindestens eine Gas-Absaugeinrichtung, sowie
- mindestens eine Gasverbindungsleitung von der Pumpeinrichtung und/oder der Gas-Absaugeinrichtung zur Gaszuführeinrichtung bzw. Gasabführeinrichtung.

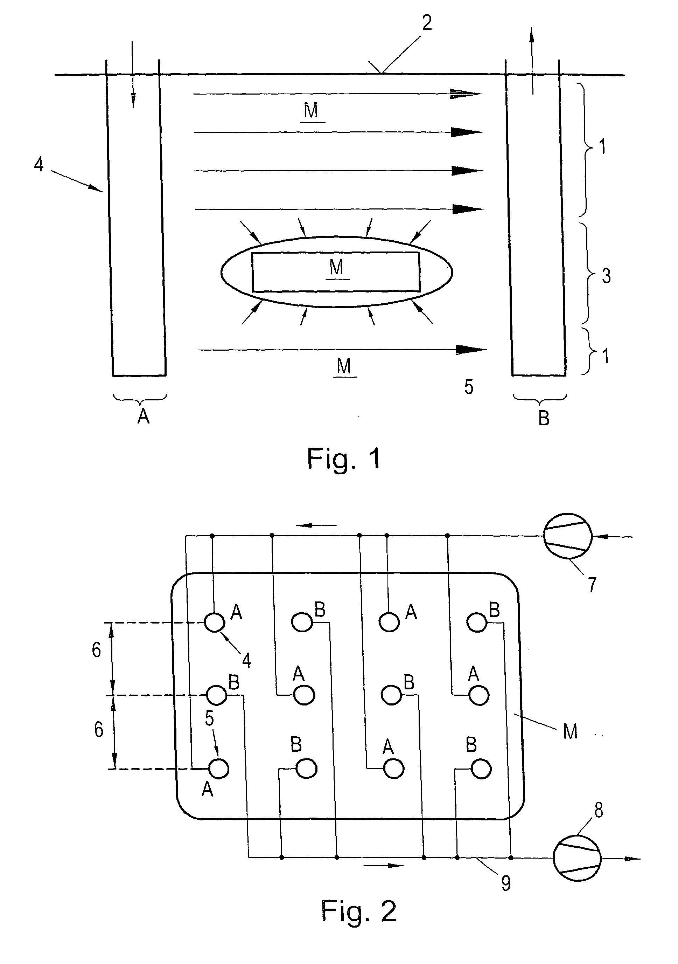

Die Erfindung ist nachfolgend anhand der Zeichnung, die in schematischer Darstellung in Fig. 1 das Verfahrensprinzip und in Fig. 2, in ebenfalls schematischer Darstellung, eine Anlage in Ansicht von oben zeigt, näher erläutert.

In Fig. 1 ist ein Material M, das mit einem Gas zu belüften ist, dargestellt, wobei das Gas an einer ersten Stelle A dem Material M zugeführt wird und an einer zweiten Stelle B aus dem Material M wieder austritt. Es handelt sich bei dem dargestellten Ausführungsbeispiel um eine Deponiebelüftung, bei der das Deponiematerial M mit Luft zur Erzielung eines aeroben Zustandes gespült wird.

Das Material M ist ungleichmäßig geschichtet. Es weist einen gut durchlässigen Bereich 1 auf, der sich näher zur Deponieoberfläche 2 befindet, und einen unteren, unterhalb des gut durchlässigen Deponiematerials M befindlichen, für das Gas, d.h. die Luft, schlecht durchlässigen Bereich 3, auf.

Erfindungsgemäß wird über die erste Stelle A über eine Luftzufuhreinrichtung 4, es handelt sich vorzugsweise um ein perforiertes Rohr, Luft in das Deponiematerial M eingeblasen und an der zweiten Stelle B über eine Gasaustrittseinrichtung 5, es handelt sich ebenfalls um ein perforiertes, in das Deponiematerial M eingesetztes Rohr, austreten gelassen.

Würde man wie bei herkömmlichen Verfahren mit hohem Druck die Luft einblasen und mit hohem Unterdruck wiederum absaugen, würden sich bevorzugte Strömungswege durch das gut durchlässige Deponiematerial M, also durch den oberen Bereich 1 des Deponiematerials M, ausbilden, und der schlechter gasdurchlässige Bereich 3 würde mit Luft gar nicht oder nur völlig unzureichend versorgt werden.

Der beim Stand der Technik auftretenden Problematik der bevorzugten Strömungswege bzw. Wegigkeiten wird erfindungsgemäß wie folgt begegnet (hierbei handelt es sich um ein Beispiel, das im Rahmen der Erfindung abwandelbar ist):

An der ersten Stelle A wird Überdruck aufgebracht und an der zweiten Stelle B Unterdruck. Luft strömt, um einen Druckausgleich herzustellen, bis sich ein stationärer Strömungszustand eingestellt hat. Sobald sich ein homogenes Druckregime aufbaut, wird die

Luftfördermenge und der Lufteintrag verändert. Dadurch stellen sich nie stabile Druckzustände ein, sondern in jeder Pore des Bodens wird permanent der Druck geändert und es findet daher permanent ein Luft-Zu- und Abführen statt. Dies führt zu einer "ATMUNG" jeder einzelnen Bodenpore und dies wiederum zu einer raschen Zufuhr von frischem Sauerstoff in jeden Bereich der Kontamination durch Strömungsvorgänge anstelle der üblichen sehr langsamen Versorgung durch Diffusionsvorgänge.

Diese Möglichkeit des Gasaustausches hat sich bis dato jeder anderen als weit überlegen gezeigt, da alle anderen getesteten Varianten dazu neigen, bevorzugten Wegigkeiten zu folgen. Es ist auch theoretisch "keine" Limitation in Richtung schlechtere Durchlässigkeit gegeben, sondern mit der schlechteren Durchlässigkeit steigt nur die Zeitdauer, bis Druckausgleich erreicht wird.

Erfindungsgemäß wird - und dies ist wesentlich - die Richtung der Belüftung, d.h. die Richtung des Luftstromes, stets beibehalten, da andernfalls eine sogenannte Pendelatmung entstünde. Es würde bei einer zyklischen Umkehr der Strömungsrichtung zu einer Pore nur die Luft wiederum zugeführt werden, welche zuvor aus der Pore abgeführt wurde. Die Strömungsrichtung der Belüftung bleibt daher erfindungsgemäß gleich.

Der Problematik der bevorzugten Strömungswege wird durch eine entsprechend niedere Förderrate sowie durch wechselnde Druckgradienten begegnet. Es wird also mit möglichst kleinen Energieeinträgen das Gefüge so wenig wie möglich verändert. Daher wird - je weiter die Durchlässigkeit des Bodens abnimmt - auch der Energieeintrag abgesenkt.

Im einfachsten Fall werden also zwei Stellen A und B errichtet. An einer wird nur periodisch eingeblasen, an der anderen nur periodisch abgesaugt. Zuerst wird an der ersten Stelle A eingeblasen, an der zweiten Stelle B herrscht weiterhin atmosphärischer Druck. Dadurch erhöht sich der Druck in der Umgebung der ersten Stelle, bis sich durch den Luftstrom zur zweiten Stelle B ein stabiles Überdruckregime ausgebildet hat, welches sich an der zweiten Stelle B durch die Strömung nach außen wieder auf atmosphärischen Druck abbaut. Durch diesen Luftstrom werden alle bevorzugten Wegigkeiten gut durchlüftet und in alle anderen (undurchlässigeren) Bereichen 3 des Untergrundes wird soviel Luft eingebracht, bis sich der Druck angeglichen hat. Danach strömt nur mehr Luft durch die bevorzugten Wegigkeiten. Es findet in den undurchlässigeren Bereichen 3 kein Gasaustausch mehr statt, da keine Treibkraft mehr vorhanden ist.

Sobald dieser Zustand erreicht ist, wird die Einblasung an der ersten Stelle A beendet und wieder atmosphärischer Druck angelegt. Gleichzeitig beginnt an der zweiten Stelle B eine Absaugung. Es wird also ein lokaler Unterdruck angelegt, welcher einen Luftstrom durch die bevorzugten Wegigkeiten wieder von der ersten zur zweiten Stelle in Gang setzt. Allerdings breitet sich nunmehr ein Unterdruckregime im gesamten Untergrund aus. Dadurch müssen Poren in weniger durchlässigen Bereichen 3 wiederum ihren Druck angleichen, indem sie mittels Luftströmung Gas abgeben. Sobald sich dieses Unterdruckregime vollständig aufgebaut hat, herrscht wieder kein Gasaustausch mehr zwischen den durchlässigen bevorzugten Wegigkeiten und den undurchlässigeren Bereichen 3 des Bodens. Es beginnt daher der Prozess von vorne.

Unter bestimmten Voraussetzungen kann auf die Einblasung oder auf die Absaugung verzichtet werden.

Fig. 2 zeigt eine Ansicht von oben auf eine Deponie, aus der die Rasterung der ersten Stellen A und der zweiten Stellen B zu ersehen ist. Für die Anordnung des Rasters, also des Abstandes 6 der ersten Stellen A von den zweiten Stellen B, ist eine Orientierung an der Durchlässigkeit des Materials M erforderlich. Für gut durchlässige Materialien M kann der Abstand 6 der ersten Stellen A von den zweiten Stellen B 10 bis 15 m betragen, wobei die Zeitdauer zwischen den periodisch wechselnden Druckunterschieden bei etwa fünf Minuten je Periode liegt. Ist die Rasterung größer, steigt die Zeitdauer annähernd linear. Eine Pumpeinrichtung ist mit 7 und eine Absaugeinrichtung mit 8, die Gasleitungen mit 9 bezeichnet. Je nach Betriebsweise kann entweder auf die Pumpeinrichtung 7 oder die Absaugeinrichtung 8 auch verzichtet werden.

Für kleinere Korndurchmesser des Materials M kann die Zeit zwischen zwei aufeinanderfolgenden Druckunterschieden auch weit länger andauern, gegebenenfalls bis zu einer Stunde. Erreicht jedoch ein Druckunterschied die zweite Stelle B nie, ist eine geringere Rasterung, d.h. ein geringerer Abstand 6 zwischen der ersten Stelle A und zweiten Stelle B bzw. zwischen den ersten Stellen A und zweiten Stellen B, erforderlich.

Genauere Werte für die Rasterung und für die Zeitdauer zwischen zwei aufeinanderfolgenden Druckunterschieden lassen sich in Folge der Unbestimmtheit des zu durchlüftenden Materials M von vornherein nicht festlegen, denn das erfindungsgemäße Verfahren kann für Materialien jeder Art, die zu begasen sind, eingesetzt werden. Dies heißt mit anderen Worten, dass Versuche durchgeführt werden müssen, um die optimale Einstellung des erfindungsgemäßen Verfahrens zu finden.

Ein Verfahren zum optimalen Einstellen des erfindungsgemäßen Verfahrens kann beispielsweise wie folgt ablaufen:

Zunächst erfolgt der Aufbau einer ersten Stelle A und einer zweiten Stelle B und es werden Druckmesseinrichtungen an der ersten Stelle A und zweiten Stelle B und vorzugsweise auch dazwischen vorgesehen. Sodann wird die zweite Stelle B zur Atmosphäre hin geschlossen und mit einer Einblasung in die erste Stelle A begonnen. Mit Hilfe der Druckmesseinrichtungen kann dann die Druckausbreitung verfolgt werden. Sobald alle Druckmesseinrichtungen keinen Druckanstieg mehr registrieren, ist dies ein Anzeichen dafür, dass kein treibender Druckunterschied mehr für einzelne Poren vorhanden ist. Sodann wird die Einblasung beendet und an der ersten Stelle A mit einer Absaugung begonnen. Hierbei erfolgt erneut eine Verfolgung der Druckänderungen mit Hilfe der Druckmesseinrichtungen. Sobald keine Änderungen des Druckes mehr registrierbar sind, sondern nur mehr ein stabiles Druckfeld existiert, wird die Absaugung beendet. Aufgrund dieses Versuches kann die optimale Zeitdauer zwischen zwei aufeinanderfolgenden Druckunterschieden ermittelt werden. Vorzugsweise wird das Messverfahren mehrfach wiederholt, um tatsächlich die optimale Zeitdauer aufgrund von Durchschnittswerten festzustellen. Gegebenenfalls - bei zu langer Zeit für einen Druckausgleich - ist die Distanz 6 zwischen der ersten Stelle A und der zweiten Stelle B zu verkleinern; bei zu raschem Druckausgleich zu vergrößern.

Selbstverständlich kann auch während des regulären Betriebes anhand von Druckmesseinrichtungen eine Steuerung in Abhängigkeit der Druckschwankungen bzw. bei Feststellen einer Druckkonstanz erfolgen.

Das erfindungsgemäße Verfahren lässt sich insbesondere wie nachfolgend skizziert anwenden bei:
- Deponievorbelüftungen vor Deponieräumungen,
- Deponiebelüftungen zum Zweck, alles abbaubare organische Material abzubauen und so in einen langfristig stabilen Zustand überzuführen - "in situ-Kompostierung",
- Deponiebelüftungen zur Verhinderung ungewollter Deponiegasemissionen,
- einem Abbau von organischem Material im Untergrund, bei dem zumindest partiell luftgefüllte Porenräume vorliegen,
- Kompostmieten.

## Patentansprüche

1. Verfahren zum Versorgen eines Poren aufweisenden Materials (M) mit einem Gas, wobei das Gas in das Material (M) an mindestens einer ersten Stelle (A) einströmen und an mindestens einer zweiten, von dieser ersten Stelle im Abstand (6) angeordneten Stelle (B) ausströmen gelassen wird, **dadurch gekennzeichnet, dass** zwischen der ersten Stelle (A) und der zweiten Stelle (B) ein periodisch wechselnder Druckunterschied zwischen dem einströmenden Gas und dem ausströmenden Gas erzeugt wird, wobei jedoch die Strömungsrichtung des Gases von der ersten Stelle (A) zur zweiten Stelle (B) aufrecht erhalten wird.

2. Verfahren nach Anspruch 1, **dadurch gekennzeichnet, dass** in einem ersten Schritt das Gas an der ersten Stelle (A) eingeblasen wird und an der zweiten Stelle (B) ausströmen gelassen wird, worauf in einem zweiten Schritt an der zweiten Stelle (B) Gas abgesaugt wird und an der ersten Stelle (A) einströmen gelassen wird, worauf gegebenenfalls diese zwei Schritte ein- oder mehrfach wiederholt werden.

3. Verfahren nach Anspruch 1 oder 2, **dadurch gekennzeichnet, dass** in einem ersten Schritt das Gas an der ersten Stelle (A) eingeblasen wird und an der zweiten Stelle (B) ausströmen gelassen wird, worauf das Einblasen an der ersten Stelle (A) druckmäßig abgesenkt oder eingestellt wird und an der zweiten Stelle (B) jedoch das Ausströmen-Lassen aufrechterhalten wird, worauf gegebenenfalls diese zwei Schritte ein- oder mehrfach wiederholt werden.

4. Verfahren nach einem der Ansprüche 1 bis 3, **dadurch gekennzeichnet, dass** in einem ersten Schritt das Gas an der zweiten Stelle (B) abgesaugt wird und an der ersten Stelle (A) einströmen gelassen wird und in einem zweiten Schritt der Absaugunterdruck an der zweiten Stelle (B) abgesenkt oder das Absaugen eingestellt wird und an der ersten Stelle (A) das Einströmen-Lassen aufrechterhalten wird, worauf gegebenenfalls diese zwei Schritte einoder mehrfach wiederholt werden.

5. Verfahren nach einem der Ansprüche 1 bis 4, **dadurch gekennzeichnet, dass** der periodisch wechselnde Druckunterschied zwischen einem maximalen Überdruck von 3 bar und einem maximalen Unterdruck von -0,99 bar eingestellt wird.

6. Verfahren nach einem der Ansprüche 1 bis 5, **dadurch gekennzeichnet, dass** der Druckunterschied in Abhängigkeit der Porosität des Materials (M) eingestellt wird, vorzugsweise für gut durchlässige Materialien (M) mit Korngrößen > 0,2 mm zwischen einem Überdruck von 0,5 bar und einem Unterdruck von-0,2 bar.

7. Verfahren nach einem der Ansprüche 1 bis 6, **dadurch gekennzeichnet, dass** die Zeitdauer zwischen einem Maximaldruck und einem Minimaldruck in Abhängigkeit der Korngröße des Materials (M) festgelegt wird, und zwar derart, dass ein periodisch wechselnder Druckunterschied über das gesamte Material (M) erzeugt wird.

8. Verfahren nach Anspruch 7, **dadurch gekennzeichnet, dass** für ein Material (M) mit einer durchschnittlichen Korngröße > 0,2 mm ein Zeitintervall vom Maximaldruck bis zum Minimaldruck von etwa fünf Minuten eingehalten wird.

9. Verfahren nach Anspruch 7 oder 8, **dadurch gekennzeichnet, dass** die Distanz (6) von der ersten Stelle (A) bis zur zweiten Stelle (B) derart festgelegt wird, dass der Maximaldruck und der Minimaldruck jeweils etwa fünf Minuten auf das gesamte Material (M) einwirken.

10. Verfahren nach einem der Ansprüche 1 bis 9, **dadurch gekennzeichnet, dass** zwischen aufeinanderfolgenden Druckwechseln eine Ruhephase bei konstantem Druck eingehalten wird.

11. Verfahren zum optimalen Einstellen des Verfahrens nach einem der Ansprüche 1 bis 10, **dadurch gekennzeichnet, dass** an der ersten Stelle (A) und an der zweiten Stelle (B) bzw. an mehreren der ersten Stellen (A) und an mehreren der zweiten Stellen (B), sowie gegebenenfalls auch zwischen der ersten Stelle (A) und der zweiten Stelle (B), Druckmesseinrichtungen vorgesehen werden, worauf die Stelle (B) bzw. die Stellen (B), bei denen Gas ausströmt, derart verschlossen werden, dass eine Kommunikation mit der Außenluft nicht mehr möglich ist, worauf über die Druckmesseinrichtungen nach Einleiten von Gas in die andere(n) Stelle(n) (A) die Druckausbreitung beobachtet wird, bis kein Druckanstieg mehr an einer der Druckmesseinrichtungen feststellbar ist, sodann wird mit einer Absaugung begonnen und erneut über die Druckmesseinrichtungen eine Druckänderung so lange beobachtet, bis kein Absinken des Druckes mehr an einer der Druckmesseinrichtungen feststellbar ist.

12. Anlage zur Durchführung des Verfahrens nach einem der Ansprüche 1 bis 11, **gekennzeichnet durch**:
- mindestens eine Gaszuführeinrichtung (4), vorgesehen in dem Material (M),
- mindestens eine Gasabführeinrichtung (5), vorgesehen in dem Material (M) im Abstand (6) von der Gaszuführeinrichtung (4),
- mindestens eine das zuzuführende Gas unter Druck oder Unterdruck setzende Pumpeinrichtung (7) und/oder mindestens eine Gas-Absaugeinrichtung (8), sowie
- mindestens eine Gasverbindungsteitung (9) von der Pumpeinrichtung (7) und/oder der Gas-Absaugeinrichtung (8) zur Gaszuführeinrichtung (4) bzw. Gasabführeinrichtung (5).
